# EUROPÄISCHE PATENTSCHRIFT

(11) **EP 3 397 948 B1**
(45) Veröffentlichungstag und Bekanntmachung des Hinweises auf die Patenterteilung: **18.11.2020**
(21) Anmeldenummer: 16826735.9
(22) Anmeldetag: 23.12.2016
(51) Int. Cl.: G01N 21/3577, G01N 21/359, G01N 21/552, G01N 21/85

(54) **VORRICHTUNG ZUR ANALYSE VON EINEM SICH IN EINEM PRODUKTRAUM BEFINDENDEN ZU ANALYSIERENDEN GUT**
DEVICE FOR ANALYSING A PRODUCT TO BE ANALYSED LOCATED IN A PRODUCT SPACE
DISPOSITIF D'ANALYSE D'UN PRODUIT À ANALYSER SE TROUVANT DANS UNE CHAMBRE DE PRODUIT

(30) Priorität: 30.12.2015 DE 102015122995
(43) Veröffentlichungstag der Anmeldung: 07.11.2018
(73) Patentinhaber: Endress + Hauser Conducta GmbH+Co. KG, 70839 Gerlingen (DE)
(72) Erfinder: MANNHARDT, Joachim, 73569 Eschach (DE); LAMBRECHT, Armin, 79232 March-Hugstetten (DE); SULZ, Gerd, 79238 Ehrenkirchen (DE)
(74) Vertreter: Raunecker, Klaus Peter
(86) Internationale Anmeldenummer: PCT/EP2016/082520
(87) Internationale Veröffentlichungsnummer: WO 2017/114770

(56) Entgegenhaltungen:
- WO-A1-02/01202
- WO-A1-02/01203
- WO-A1-2007/009522
- WO-A1-2014/111498
- WO-A1-2015/052893
- US-A- 5 051 551
- US-A- 5 835 231
- US-A1- 2009 216 464
- US-B1- 6 466 323

## Beschreibung

Die Erfindung betrifft eine Vorrichtung nach dem Oberbegriff des Anspruchs 1.

Zur Steigerung der Flexibilität und Effizienz industrieller Produktionsprozesse ist ein umfassendes Prozessverständnis erforderlich. Gefordert sind Sensoren, die Informationen über Materialzusammensetzungen, Prozessparameter, Reaktionsverläufe und Produktqualitäten liefern.

Hier bieten optische spektroskopische Sensoren, die ohne Medienberührung arbeiten, entscheidende Vorteile. Die am häufigsten verwendete Technik ist die Spektroskopie im Nahinfrarot-Bereich (NIR) im Wellenlängenbereich von 0,8-2,5 µm. Eine Erweiterung derartiger spektroskopischer Analyseverfahren in den mittleren Infrarot-Bereich (MIR) mit Wellenlängen von 3-30 µm bietet dabei eine hohe Sensitivität und Selektivität. Insbesondere flüssiges Wasser und damit alle wässrigen Lösungen absorbieren im MIR-Bereich sehr stark, sodass für Transmissionsmessungen sehr kleine Schichtdicken kleiner 100 µm verwendet werden müssen. Ein vielversprechendes bereits bekanntes Verfahren ist die Verwendung der abgeschwächten Totalreflexion, abgekürzt ATR.

Dieses ATR-Analyseverfahren ist zur Untersuchung von Flüssigkeiten und Feststoffen in der Prozessanalytik bereits verbreitet. Damit können stark absorbierende Proben spektroskopisch untersucht werden. Die übliche Anordnung einer sogenannten ATR-Sonde besteht aus einem ATR-Kristall mit ebenen Grenzflächen, von denen zumindest eine in Kontakt mit dem zu analysierenden Medium gebracht wird. Eine an der Grenzfläche zum Medium im Inneren des Kristalles total reflektierte elektromagnetische Welle wird dabei aufgrund der Wechselwirkung ihres evaneszenten Feldes mit dem zu analysierenden Medium im Außenbereich des Kristalls abgeschwächt. Analysiert werden kann dann der ggf. spektral aufgelöste Abschwächungsgrad, der mit den Stoffeigenschaften des zu analysierenden Mediums verknüpft ist. Für übliche ATR-Geräte im UV- bis MIR-Strahlungsbereich werden überwiegend spektral breitbandige Lichtquellen eingesetzt. Hierbei erfolgt die Detektion mit Spektrometern oder Einzeldetektoren mit Spektralfiltern.

Bei der ATR-Spektroskopie beträgt die Eindringtiefe der evaneszenten Welle in das Medium nur etwa eine Wellenlänge. Mit anderen Worten, im NIR-Bereich wird mit der ATR-Technik lediglich eine Schichtdicke von deutlich weniger als 1 µm analysiert, während mit der MIR-Spektroskopie aufgrund der größeren Wellenlänge mehrere Mikrometer erreicht werden können. Generell sind bei der ATR-Spektroskopie, unabhängig vom genannten Spektralbereich, Verunreinigungen der Oberfläche ein gewisses Problem. Durch Beläge auf der Oberfläche wird der Sensor "blind". Ein ATR-Spektrometer oder ATR-Fotometer muss daher immer saubere und gut reinigbare Oberflächen aufweisen.

Übliche ATR-Anordnungen verwenden als ATR-Elemente Kristalle mit planen Oberflächen, wie beispielsweise Prismen. Eine besondere Herausforderung ist die Integration derartiger Prismen oder auch Platten in Prozesssonden. Die Sondenkörper werden meist mit einem zylindrischen Sondenschaft ausgebildet, um über eine Öffnung als Flansch in einen Reaktor oder eine Rohrleitung eingebracht zu werden. Die ATR-Elemente befinden sich dann entweder an der Spitze des Sondenschafts oder an der Längsseite. Bei einem ATR-Element an der Spitze ist die Anzahl der Reflexionen und damit die Empfindlichkeit jedoch begrenzt.

In der internationalen Offenlegungsschrift WO 2015/052893 A1 wird eine Anordnung gezeigt, bei der das Licht in ein zylinderförmiges ATR-Element von den Stirnflächen des Zylinders her eingekoppelt wird und längsseitig schraubenförmig das ATR-Element durchläuft. Bei der Einbindung des ATR-Elements in Halterungen entstehen jedoch Kanten und Vorsprünge, an denen sich Ablagerungen bilden können. Die Reinigung der Kanten und Vorsprünge mit Reinigungsflüssigkeiten, mit Heißdampf oder mechanischen Mitteln ist dann entsprechend aufwändig. Eine zylinderförmige Sonde mit einem ATR-Element ist auch aus US5051551 und US2009/0216464 bekannt.

Des Weiteren ist aus der Druckschrift WO 2007/009522 A1 oder WO2014/111498 A1 aus dem Bereich der NIR-Prozess-Spektroskopie eine Anordnung zur Reflexionsmessung bekannt. Derartige Sonden werden seitlich zum Sondenkörper durch ein Fenster Licht in das Prozessmedium geleitet und das rückgestreute oder reflektierte Licht ebenfalls seitlich detektiert. Die beschriebene Anordnung kann sehr gut gereinigt werden.

Aufgabe der vorliegenden Erfindung ist es, eine Vorrichtung anzugeben, welche optimal zur Analyse eingesetzt werden kann und eine einfache Reinigung ermöglicht.

Diese Aufgabe wird gelöst durch die Vorrichtung mit den Merkmalen des Anspruchs 1. Die Unteransprüche betreffen vorteilhafte Ausführungsformen und Varianten der Erfindung.

Die Erfindung schließt eine Vorrichtung zur Analyse von einem sich in einem Produktraum befindenden zu analysierenden Gut mit einem in einem Sondengehäuse angeordneten Sondenkörper mit einer Umfangswand ein, mit mindestens einer Strahlungsquelle und mindestens einem optischen Empfänger, mit zumindest einem Messfenster im Sondenkörper mit einem Eintrittsbereich und einem Austrittsbereich für Messstrahlung und mit einer Auswerteeinheit. Der Sondenkörper kann in eine Messposition gebracht werden, bei der wenigstens ein Teil des Sondenkörpers, in welchem sich das Messfenster befindet, durch eine Öffnung des Sondengehäuses in den Produktraum zur Analyse eintaucht. Des Weiteren kann der Sondenkörper in eine zurückgezogene Position gebracht werden, bei welcher sich der Sondenkörper wenigstens noch teilweise im Bereich der Öffnung des Sondengehäuses befindet und dabei die Öffnung abdeckt. Gemäß der erfindungsgemäßen Lösung ist das zumindest eine Messfenster ein ATR-Element, wobei das ATR-Element in wenigstens einem Teilbereich der Umfangswand des Sondenkörpers im Strahlengang angeordnet ist.

Die Erfindung betrifft folglich eine Analysevorrichtung, mit der Gut unterschiedlicher Beschaffenheit untersucht werden kann, welches sich primär auf der Außenseite des Sondenkörpers befindet.

Hierbei ist ein ATR-Element oder sind mehrere ATR-Elemente konstruktiv an die Geometrie des Sondenkörpers angepasst. Weist der Sondenkörper im Bereich des zumindest einen ATR-Messfensters im Wesentlichen eine hohlzylindrische Geometrie auf, so ist ein ATR-Element an die vorgegebenen Verhältnisse angepasst und im Sondenkörper ohne vorstehende Kanten integriert. Dadurch wird der Sondenkörper besonders kompakt und damit insbesondere gut reinigbar ausgeführt.

Prinzipiell ist auch eine Untersuchung eines zu analysierenden Mediums auf der Innenseite des Sondenkörpers angedacht. Bei einer derartigen Verwendung als Rohrsonde wird die Sonde im Inneren mit dem Prozessmedium durchströmt. Auf Grund der glatten Innenflächen kann hier eine chemomechanische Reinigung wie bei anderen Teilen der Prozessanlage ohne Ausbau von Teilen der Analysesonde erfolgen.

Prinzipiell kann die verwendete Messstrahlung durch geeignete optische Hilfsmittel, beispielsweise Prismen oder Spiegel, zum ATR-Element gelangen. In einer Ausgestaltung der Erfindung kann die zur Analyse verwendete Messstrahlung auch mittels Sende- bzw. Empfangslichtleitern zum ATR-Element und von dort zum optischen Empfänger geführt werden. Die Messstrahlung tritt derart in das ATR-Element ein, dass sie innerhalb des ATR-Elements totalreflektiert wird und auf diese Weise im Inneren durch das ATR-Element hindurch tritt, um über ihr evaneszentes Feld mit dem zu analysierenden Gut in Wechselwirkung zu treten. Die aus dem ATR-Element durch Wechselwirkung resultierende Messstrahlung wird beispielsweise mittels eines Empfangslichtleiters zum optischen Empfänger zurückgeführt und von der Auswerteeinheit weiterverarbeitet. Hierbei wird durch eine hohe Anzahl an Reflexionen der Messstrahlung im ATR-Element eine entsprechend hohe Empfindlichkeit der Anordnung erzielt.

Der Sondenkörper kann in der Messposition wenigstens zum Teil mit dem ATR-Element als Messfenster durch eine Öffnung des Sondengehäuses in den Produktraum zur Analyse eintauchen. Bei geeignet gekrümmten Ausführungsformen des ATR-Elements können beispielsweise über den Flüstergalerie-Effekt eine hohe Anzahl von Reflexionen auf geringem Raum erreicht werden, um das Messsignal zu verstärken. Der Sondenkörper kann über die Öffnung als Zugangsflansch in den Prozess eingeführt werden und hat damit auf der Außenseite Kontakt mit dem Prozessmedium.

Sobald der Sondenkörper sich in einer zurückgezogenen Position befindet, bei welcher er sich wenigstens noch teilweise im Bereich der Öffnung des Sondengehäuses befindet, das ATR-Element jedoch außerhalb des Produktraumes angeordnet ist,, kann dieses auf einfache Weise gereinigt werden. Möglichkeiten zum Reinigungsvorgang sind beispielsweise bereits in der WO 2007/009522 A1 beschrieben. Der Offenbarungsgehalt dieser Druckschrift ist deshalb zumindest hinsichtlich der Reinigung der Sonde vollumfänglich eingebunden.

Geeignete Materialien für ATR-Elemente sind Saphir, Ge, ZnSe, ZnS, CaF2, BaF₂, Chalkogenidgläser oder Diamant. Als ATR-Element für den MIR-Spektralbereich wird bis zu einer Wellenlänge von etwa 5 µm vorzugsweise das Material Saphir verwendet, das eine ausgezeichnete Prozessbeständigkeit besitzt. Für größere Wellenlängen können Materialien wie Germanium, ZnSe, ZnS, CaF₂, BaF₂, Chalkogenidgläser oder Diamant eingesetzt werden. Der Sondenkörper kann beispielsweise aus Edelstahl bestehen. Harte Materialien, wie beispielsweise Diamant oder diamantartiger Kohlenstoff, können auch als Oberflächenbeschichtungen in Betracht kommen. Insbesondere zumindest dort, wo die Oberfläche des Sondenkörpers mit dem zu analysierenden Gut in Kontakt kommt. Dies dient zur Erhöhung der Abriebfestigkeit einerseits beim Reinigungsprozess und andererseits auch beim Eintauchen des Sondenkörpers in feste Substanzen.

Ein Vorteil der Erfindung besteht darin, dass die konstruktive Lösung des Sondenkörpers sowohl aus optischen Gesichtspunkten als auch aus strömungstechnischen Erwägungen in Bezug auf eine mögliche Verschmutzung und Reinigbarkeit des Sondenkörpers günstig ausgeführt ist. Durch die Integration eines geometrisch in den Sondenkörper ohne Ecken und Kanten eingepassten ATR-Elements kann eine Reinigung auf einfache Weise erfolgen. Außerdem wird die Sondenoberfläche bei bewegten Prozessmedien gut umströmt, wodurch ein rascher Stoffaustausch an der Oberfläche gewährleistet ist.

So eignet sich die erfindungsgemäße Analysevorrichtung besonders zur Inline-Prozessanalytik in der chemischen und pharmazeutischen Industrie, in der Lebensmittelindustrie, beispielsweise zur Bestimmung des Alkohol- oder Zuckergehalts in Getränken oder der Zusammensetzung von Speiseölen und Fetten. Ebenso eignet sich die Analysevorrichtung zu Analysen im Bereich der Petrochemie und Mineralölindustrie zur Bestimmung der Zusammensetzung und Alterung von Kraft- und Schmierstoffen. Eine Anwendung in der Biotechnologie kann zur Überwachung von Biogasreaktoren bei Fermentationsprozessen dienen. Die erfindungsgemäße verbesserte Prozessanalytik ermöglicht höhere Anlagenwirkungsgrade und gleichbleibend höhere Produktqualitäten.

In vorteilhafter Ausgestaltung der Erfindung kann das ATR-Element als Hohlzylinder ausgebildet sein. Somit kann die Messstrahlung im ATR-Zylinder durch Mehrfachreflexionen über den Umfang geführt werden. Die Licht- Ein- und Auskopplung erfolgt vorzugsweise auf der Innenseite des Hohlzylinders bzw. von den Stirnseiten des Hohlzylinders. Auch eine Ausgestaltung als Hohlzylindersegment ist denkbar.

Hierbei kann insbesondere ein zylinderförmiges ATR-Element ohne Kanten glatt in einen oft ebenfalls zylindrischen Sondenkörper einer Prozesssonde eingepasst werden. Die zylinderförmige Anordnung ermöglicht zum einen eine gute Umströmung der sensitiven Oberfläche im Prozess sowie eine effiziente Reinigung. Zum anderen kann mit den genannten Geometrien eine hohe Anzahl von Reflexionen und damit eine hohe Sensitivität erreicht werden.

In einer weiteren Variante der Erfindung kann der Eintrittsbereich und/oder Austrittsbereich der Messstrahlung im Falle eines zylinderförmigen ATR-Elements so ausgebildet sein, dass die Messstrahlung im ATR-Element schraubenförmig umlaufend zum Austrittsbereich geführt wird. Durch eine schraubenförmige Lichtausbreitung kann dabei der Lichtweg weiter verlängert werden. Die Anzahl der Reflexionen ist zum einen durch die Höhe des Zylinderelements und zum anderen durch die Steigung eines Schraubengangs vorgegeben.

Alternativ kann vorteilhafterweise der Eintrittsbereich und/oder Austrittsbereich der Messstrahlung im Falle eines zylinderförmigen ATR-Elements so ausgebildet sein, dass die Messstrahlung im ATR-Element kreisförmig umlaufend zum Austrittsbereich geführt wird. In dieser Ausführungsform kann die Licht-Einkopplung ergänzend zu weiteren Ausführungsformen auch in vorteilhafter Weise durch eine keilförmige Einkerbung entlang der Innenseite des Zylinders oder durch Gitterstrukturen in Längsrichtung realisiert werden. In dieser Anordnung ist eine gute Ausleuchtung des Zylinders über Zylinderoptiken zur Licht-Ein- und -Auskopplung von der Innenseite des Zylinders her möglich.

In weiterer vorteilhafter Ausgestaltung der Erfindung können mehrere über die Umfangswand des Sondenkörpers verteilt angeordnete ATR-Elemente vorgesehen sein. Mehrere ATR-Elemente lassen sich in verschiedenartiger Weise ausgestalten und beispielsweise mit anderen optischen Messverfahren kombinieren.

In weiterer ergänzender Ausführungsform kann das zumindest eine ATR-Element als Zylindersegment ausgebildet sein. Es sind auch Anordnungen mit mehr als zwei Längszylindersegmenten möglich. Ein Zylindersegment kann optimal in ebenfalls zylindrische Sondenkörper eingepasst werden. Werden die Einkoppelelemente für die Messstrahlung als Nuten oder anderweitige Einkerbungen oder auch als Einkoppelgitter im ATR-Element ausgeführt, so entstehen keine vorspringenden Ecken oder Kanten im Ein- bzw. Auskoppelbereich.

Vorteilhafterweise kann das zumindest eine ATR-Element als Halbschale ausgebildet sein. In einer bevorzugten Ausführungsform werden anstelle eines durchgehenden zylinderförmigen ATR-Elements in Form eines Rohres zwei Zylinder-Schalen verwendet. Die Einkopplung des Lichts kann dabei sowohl von der Stirnseite als auch von der Längsseite durch entsprechendes Anschleifen bzw. über Gitterkoppler realisiert werden. Bei einem ATR-Element kann die Lichteinkopplung bzw. Lichtauskopplung beispielsweise auch in jeder Ausführungsform durch kegelförmiges Anschleifen auf den Stirnseiten des Rohres realisiert werden.

Bevorzugt kann das zumindest eine ATR-Element mit der Außenseite der Umfangswand des Sondenkörpers bündig abschließen. Hierdurch lässt sich eine mögliche Verschmutzung auf der Außenseite auf einfache Weise reinigen.

In einer weiteren Ausführungsform der Erfindung kann das zumindest eine ATR-Element bis auf den Eintrittsbereich und/oder Austrittsbereich der Messstrahlung mit der Innenseite der Umfangswand des Sondenkörpers bündig abschließen. Auch auf der Innenseite können bei speziellen Sondentypen verschmutzte Innenoberflächen auftreten, die gereinigt werden müssen. Zudem ist durch glatte Innenoberflächen der Bauraum für strahlführende Elemente besser zugänglich.

Vorteilhafterweise kann der Eintrittsbereich und/oder Austrittsbereich der Messstrahlung eines ATR-Elements so ausgebildet sein, dass die Messstrahlung im ATR-Element parallel zu der Längsachse zum Austrittsbereich geführt wird. Selbstverständlich wird der Messstrahl im ATR-Element mehrfach reflektiert und verläuft dadurch auch zick-zack-artig. Mit einer parallelen Führung der Messstrahlung relativ zur Längsachse eines ATR-Elements ist eine achsparallele lineare Ausbreitung vom Eintrittsbereich bis hin zum Austrittsbereich zugrunde gelegt.

In einer weiteren Variante der Erfindung kann der Eintrittsbereich und/oder Austrittsbereich der Messstrahlung des ATR-Elements als Gitterkoppler und/oder als Prismenkoppler ausgebildet sein. In der ATR-Technik ist folglich neben der Prismenkopplung auch eine Gitterkopplung denkbar. Eine Gitterkopplung kann auf der Innen- oder Außenseite des ATR-Elements durch das Einbringen von meist ringförmigen Gitterstrukturen realisiert werden. Diese Gitterstrukturen auf der Innenseite des ATR-Elementes können, beispielsweise über einen chemischen Ätzprozess mechanisch, oder durch einen Laserprozess, auch durch die Wandung des ATR-Zylinders hindurch, strukturiert werden.

Weiterhin bevorzugt kann der Eintrittsbereich und/oder Austrittsbereich der Messstrahlung des ATR-Elements als Einkerbung oder in kegelförmiger Ausführung auf der Innenseite des ATR-Elements ausgebildet sein. Hierdurch werden insbesondere auf der Innenoberfläche eines Sondengehäuses im Übergangsbereich des ATR-Elements keine vorspringenden Ecken oder Kanten erzeugt.

Vorteilhafterweise kann das zumindest eine ATR-Element zur Ein- bzw. Auskopplung weiterer optischer Messanordnungen verwendbar sein. Hierbei kann bei Exposition und Detektion von der Innenseite das ATR-Messverfahren in derselben Messsonde mit der Reflexionsspektroskopie oder anderen Spektroskopieverfahren kombiniert werden, wobei beispielsweise ein Hohlzylinder oder ein Segment für diese Verfahren auch als optisches Element dient. Besonders vorteilhaft sind Ausführungsformen, bei denen neben der Licht-Ein- und -Auskopplung für das ATR-Element auch noch Lichtquellen und Detektionseinrichtungen für optische Bildgebungs-, Reflexions- , Streuungs-, und/oder Ramanspektroskopie-Messungen vorgesehen sind. Diese Messungen können simultan mit der ATR-Messung durchgeführt werden.

Beispielsweise kann eine UV/VIS/NIR- oder MIR-Reflexions- oder eine Streulichtmessung simultan oder alternierend mit der ATR-Messung durchgeführt werden. Diese Messung kann entweder mit derselben Lichtquelle erfolgen oder mit einer gänzlich anderen Lichtquelle betrieben werden. Bei Durchstrahlung des ATR-Elements in senkrechter Richtung können Verschmutzungen auf der Oberfläche des zylinderförmigen Materials gut erkannt werden. Damit kann ein sicherer und genauer Wert zur Funktionsfähigkeit der Sonde ermittelt werden. Bei Einsatz eines bildgebenden Verfahrens zum Beispiel mit einer CCD-Kamera können Aussagen über inhomogene Verteilungen in dem flüssigen Prozessmedium oder über Beläge auf dem ATR-Element, zu Gasblasen oder Partikeln getroffen werden, die mit den ATR-Messungen korreliert werden können. Bei Verwendung der Raman-Spektroskopie kann als Lichtquelle ein Laser verwendet werden. Durch die Auslegung des ATR-Elements als Zylinderlinse kann dabei die optische Sammeleffizienz, insbesondere für den schwachen Raman Effekt verbessert werden.

In diesem Fall ermöglicht die Kombination mehrerer Techniken sowohl eine Aussage über die Zusammensetzung eines flüssigen Mediums durch die ATR-Technik, wie auch über die Eigenschaften von in dem Medium vorhandenen Partikeln oder Gasblasen mittels Lichtstreuung bzw. diffuser Reflexionsmessung. Darüber ist auch eine Kontrolle einer möglichen Verschmutzung der ATR-Oberfläche möglich, die beispielsweise für die Steuerung einer Reinigungsanlage verwendet werden kann.

Bevorzugt kann das zumindest eine ATR-Element für weitere optische Messanordnungen als abbildendes optisches Element ausgeführt sein. Das ATR-Element kann dabei auch als Linse für die anderen Messverfahren, insbesondere für weitere optische Prozess-Sensorik, eingesetzt werden. Vorteilhafterweise kann das ATR-Element auch auf der Innenseite linsenförmig oder torusförmig ausgebildet sein. Durch eine Linsenform des ATR-Elements kann zusätzlich für diese Sensorik eine Verbesserung der Sensitivität erreicht werden.

Weiterhin kann das zumindest eine ATR-Element auf der Innenseite und/oder Außenseite zumindest teilweise mit einer dielektrischen Schicht und/oder mit einer Metallschicht beschichtet sein. Dabei kann ein Teil des Rohres zur Verbesserung der Einkopplung auch metallisch beschichtet werden, um als Reflektor zu dienen.

Dadurch, dass Mittel beziehungsweise Komponenten vorhanden sind, mit welchen die Messstrahlung nach dem Austritt aus dem ATR-Element erneut in dieses eingekoppelt werden kann, kann eine Kontrastverstärkung bei der Messung erreicht werden. Zusätzlich kann der Einsatzbereich der erfindungsgemäßen Vorrichtung dadurch erweitert werden, dass Mittel beziehungsweise Komponenten vorhanden sind, die Messstrahlung gleichzeitig an verschiedenen Stellen in das ATR-Element einzukoppeln.

Nachfolgend wird die Erfindung anhand der Figuren exemplarisch erläutert. Es zeigen:
- Figur 1: Schematisch einen Längsschnitt einer Analysevorrichtung mit zylindrischem ATR-Element;
- Figur 2: Schematisch einen Querschnitt eines zylindrischen ATR-Elements mit der Einkopplung bzw. Auskopplung der Messstrahlung über kegelförmig angeschrägte Stirnseiten;
- Figur 3: Schematisch die Ein- und Auskopplung in ein ATR-Element über Gitterkoppler auf der Innenseite eines ATR-Elements;
- Figur 4: Schematisch die Einkopplung in ein zylindrisches ATR-Element über eine ringförmige Einkerbung und Auskopplung über eine kegelförmige Ausführung auf der Zylinderinnenseite;
- Figur 5: Schematisch die Ein- und Auskopplung in ein zylindrisches ATR-Element in Verbindung mit einer weiteren optischen Messanordnung;
- Figur 6: Schematisch einen Querschnitt durch ein zylinderförmiges ATR-Element;
- Figur 7: Schematisch einen Querschnitt durch ein ATR-Element mit zwei Zylindersegmenten;
- Figur 8: Schematisch einen Querschnitt durch ein torusförmiges ATR-Element als Messfenster;
- Figur 9: Schematisch einen Querschnitt durch ein ATR-Element mit Planzylinderlinse als Ein- und Auskoppelelement;
- Figur 10: Schematisch einen Querschnitt eines zylinderförmigen ATR-Elements mit gekühlten Strahlungsquellen bzw. einem Empfänger;
- Figur 11: Schematisch ein erfindungsgemäßes zylindrisches ATR-Element mit zweifachem Lichtdurchlauf; und
- Figur 12: Schematisch ein zylinderförmiges ATR-Element mit einem weiter modifizierten Lichtdurchlauf.

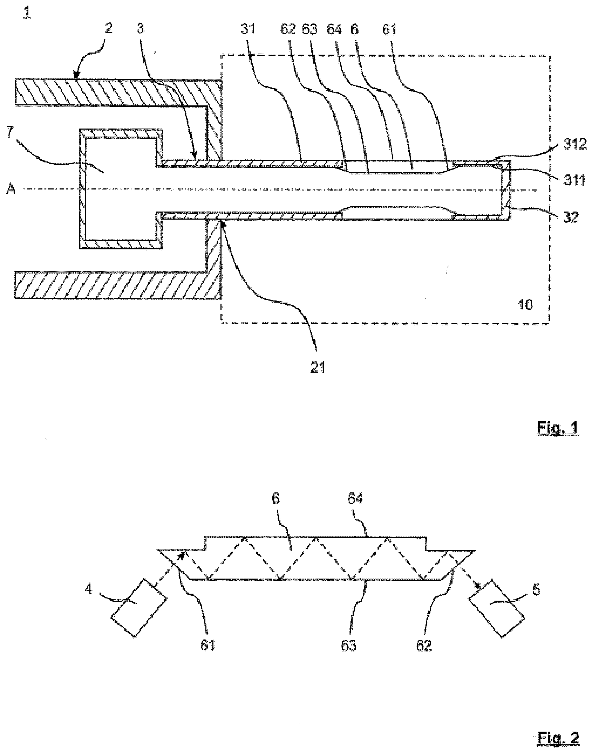

Figur 1 zeigt schematisch einen Längsschnitt einer erfindungsgemäßen Analysevorrichtung 1 als Prozesssonde mit zylindrischem ATR-Element 6. Die Analysevorrichtung 1 besteht aus einem Sondengehäuse 2 mit einer Öffnung 21, in der ein Sondenkörper 3 positioniert ist. In der Umfangswand des Sondenkörpers 31 ist ein ATR-Element 6 als Messfenster eingebaut. Das ATR-Element 6 ist in dieser Ausführung ein Hohlzylinder mit einem Eintrittsbereich 61 und einem Austrittsbereich 62 für die Messstrahlung. Die Innenseite 63 und die Außenseite 64 des ATR-Elements 6 führen die Messstrahlung durch Totalreflexion vom Eintrittsbereich 61 zum Austrittsbereich 62. Die Außenseite 64 des ATR-Elements 6 fluchtet mit der Außenseite der Umfangswand 312 des Sondenkörpers 3. Aufgrund einer kegelförmigen Ausführung des Eintrittsbereiches 61 und eines Austrittsbereiches 62 des ATR-Elements 6 ist die Innenseite 63 gegenüber der Innenseite der Umfangswand 311 des Sondenkörpers 3 etwas erhaben. Der Produktraum 10 enthält das zur Analyse vorgesehene Gut in fluider oder fester Form.

Zur Vereinfachung der Darstellung sind in Figur 1 die Strahlungsquelle und der optische Empfänger 5 nicht dargestellt. Diese Baugruppen befinden sich in der Praxis jedoch bevorzugt an einem geeigneten Ort innerhalb des Sondenkörpers 3 und der Auswerteeinheit 7. Die Ein- und Auskopplung der Messstrahlung in das ATR-Element 6 kann mit in der Figur 1 nicht dargestellten speziellen Lichtleitern oder mit Lichtquellen und Empfängern in der Nähe des ATR-Elements 6 erfolgen. Diese sind vorzugsweise dann auf entsprechenden temperierten Halterungen befestigt. Kühlstäbe können, beispielsweise im Inneren des Sondenkörpers, vom äußeren Gehäuse nach vorne geführt werden. In der Abschlusskappe 32 kann sich beispielsweise ein ebenfalls in der Figur 1 nicht dargestellter Temperatursensor für die Medientemperatur befinden. Die Medientemperatur wird für die Auswertung der ATR-Spektren verwendet. Die Temperatur der Kappe 32 und des ATR-Elements 6 kann bis 200 °C betragen. Der Sondenkörper 3 im Bereich der Auswerteeinheit 7 mit der Elektronik besitzt nahezu Umgebungstemperatur.

Das Licht kann entweder in den gesamten Zylinder oder in ein Segment des Zylinders ein- bzw. ausgekoppelt werden. Eine homogene Ein- und Auskopplung über den gesamten Umfang des Zylinders ist, beispielsweise mithilfe so genannter Schwarzschild- oder Cassegrain Optiken oder über IR-LED-Ringbeleuchtungen von der Innenseite her, möglich.

Figur 2 zeigt schematisch einen Querschnitt eines zylindrischen ATR-Elements 6 mit der Einkopplung bzw. Auskopplung der Messstrahlung. Hierbei sind die Stirnseiten des Eintrittsbereichs 61 und des Austrittsbereichs 62 für die Messstrahlung kegelförmig angeschrägt. Ausgehend von der Strahlungsquelle 4 wird die Messstrahlung zwischen der Innenseite 63 und der Außenseite 64 des ATR-Elements 6 durch Totalreflexion zum optischen Empfänger 5 geführt und dort detektiert. Außen ist das zylindrische ATR-Element beispielsweise aus Saphir oben und unten mit einer Phase versehen, mit der das Element beispielsweise in einen Edelstahlschaft eines Sondenkörpers 3 ohne vorstehende Kanten eingelötet werden kann.

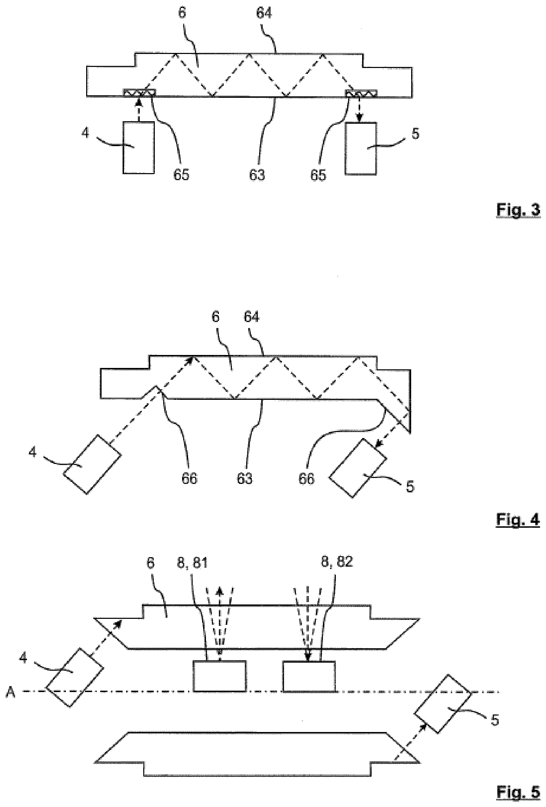

Figur 3 zeigt schematisch die Ein- und Auskopplung der Messstrahlung in ein ATR-Element 6 über Gitterkoppler 65 auf der Innenseite 63 eines ATR-Elements 6. Die Strahlführung von der Strahlungsquelle 4 in das ATR-Element 6 und vom ATR-Element 6 zum optischen Empfänger 5 kann in diesem Falle senkrecht zur Oberfläche auf der Innenseite 63 erfolgen.

Figur 4 zeigt schematisch die Einkopplung in ein zylindrisches ATR-Element 6 über eine ringförmige Einkerbung eines Prismenkopplers 66. Die Auskopplung erfolgt über eine kegelförmige Ausführung eines weiteren Prismenkopplers 66 auf der Zylinderinnenseite. Die Durchtrittsflächen für den Eintritt bzw. Austritt der Messstrahlung in den bzw. aus dem jeweiligen Prismenkoppler 66 stehen im Wesentlichen senkrecht zur Strahlrichtung. Jedenfalls so, dass dort keine Totalreflexion stattfinden kann.

Figur 5 zeigt schematisch die Ein- und Auskopplung in ein zylindrisches ATR-Element 6 in Verbindung mit einer weiteren optischen Messanordnung 8. Die Einkopplung durch die Strahlungsquelle 4 kann unter einem gewissen Winkel zur Achse A so stattfinden, dass daraus eine umlaufende schraubenförmige Lichtausbreitung im ATR-Element 6 (in Zeichenebene nicht dargestellt) bis zur Auskopplung in den optischer Empfänger 5 stattfindet. Zusätzlich ist eine weitere optische Messanordnung 8 in Gestalt einer weiteren Strahlungsquelle 81 und einem weiteren Empfänger 82 beispielsweise für spektrale Reflexions-Streumessungen eingebunden. Für eine Bildaufnahme handelt es sich bei dem Empfänger 82 bevorzugt um einen CCD-, CMOS-, InGaAs-Sensor. Für Raman-Messungen kann die Strahlungsquelle 81 als Laser-Lichtquelle und der Empfänger 82 als Raman-Detektorelement ausgeführt sein.

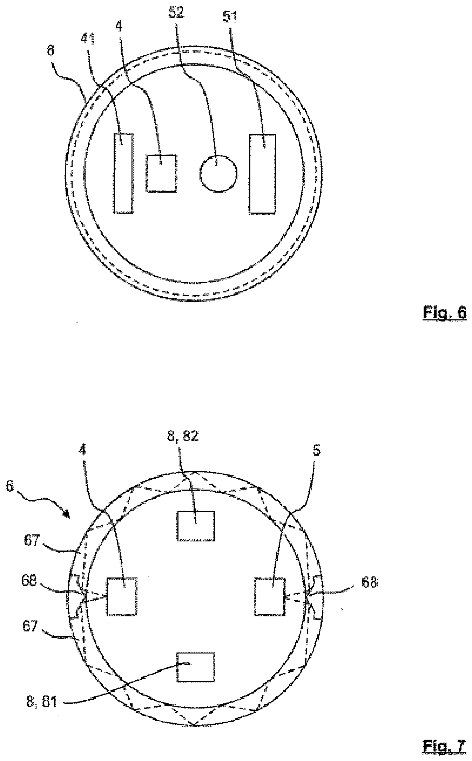

Figur 6 zeigt schematisch einen Querschnitt durch ein zylinderförmiges ATR-Element 6. Schematisch angedeutet sind eine Strahlungsquelle 4 und eine geeigneten Einkoppeloptik 41 sowie einer Lichtleitfaser 52, die in diesem Fall zur Lichtauskopplung verwendet werden kann und einer entsprechenden Auskoppeloptik 51. In einer bevorzugten Ausführungsform wird das Licht einer Infrarot-Lichtquelle als Strahlungsquelle 4 über die Einkoppeloptik 41 von der Innenseite in das zylinderförmigen ATR-Element 6 eingekoppelt. Die Strahlungsquelle 4 kann entweder ein breitbandiger thermischer Emitter, eine Infrarot-LED oder ein Infrarot-Laser sein. Nach Durchlaufen des ATR-Elements 6 wird das Licht mit einem auf der Innenseite des Sondenkörpers befindlichen Detektorelement detektiert, welches in Wirkverbindung mit der Auskoppeloptik 51 steht. Das in Figur 6 nicht weiter dargestellte Detektorelement kann entweder ein breitbandiger Detektor, zum Beispiel ein Thermopile-Detektor, ein pyroelektrischer Detektor oder ein Halbleiterdetektor sein. Der Detektor kann mit Schmalbandfiltern, Verlaufsfiltern oder ähnlichen Einrichtungen zur Detektion bestimmter spektraler Kanäle ausgestattet sein. Das Detektorelement kann auch ein Spektrometer, zum Beispiel ein mikromechanisch abstimmbares Fabry-Perot-Interferometer sein. Zur Einkopplung des Lichts existieren verschiedene Möglichkeiten, die in den Abbildungen nicht weiter dargestellt sind.

In der Ausführungsform gemäß Figur 6 wird das Licht vorzugsweise in Längsrichtung des zylinderförmigen ATR-Elements 6 geführt und so abhängig von der Höhe des Zylinderelements eine hohe Anzahl von Reflexionen erreicht. Durch eine schraubenförmige Lichtausbreitung kann dabei der Lichtweg jedoch auch wiederum weiter verlängert werden. Die Anzahl der Reflexionen ist zum einen durch die Höhe des ATR-Elements 6, durch die Verluste durch Absorption und durch die Divergenz der Lichtquelle bzw. dem Öffnungswinkel des Detektorelements begrenzt. Bei einer zu großen Divergenz können jedoch nur eine geringere Anzahl an Reflexionen realisiert werden.

In einer alternativen in der Figur 6 nicht weiter dargestellten Ausführungsform kann das Licht mit Lichtleitfasern auf der Innenseite zugeführt und nach Durchlaufen des ATR-Elements 6 wieder über Lichtleitfasern ausgekoppelt werden. Das andere Ende der Lichtleitfasen befindet sich in der in Figur 1 dargestellten Auswerteeinheit 7. Die Lichtleitfasern werden bevorzugt im Sondenkörper und im Inneren des zylinderförmigen ATR-Elements 6 geführt. Hierbei kann dann möglicherweise auf eine Kühlung verzichtet werden.

Figur 7 zeigt schematisch einen Querschnitt durch ein ATR-Element 6 mit zwei Zylindersegmenten 67. In diesem Fall verläuft die Lichtausbreitung auf dem Umfang der Zylindersegmente 67. Im Inneren des Hohlzylinders sind verschiedene Strahlungsquellen 4 und optische Empfänger 5 für die ATR-Messung oder auch für andere optische Messungen eingezeichnet. Spiegelflächen 68 verteilen das Licht zu beiden Seiten der Zylindersegmente 67.

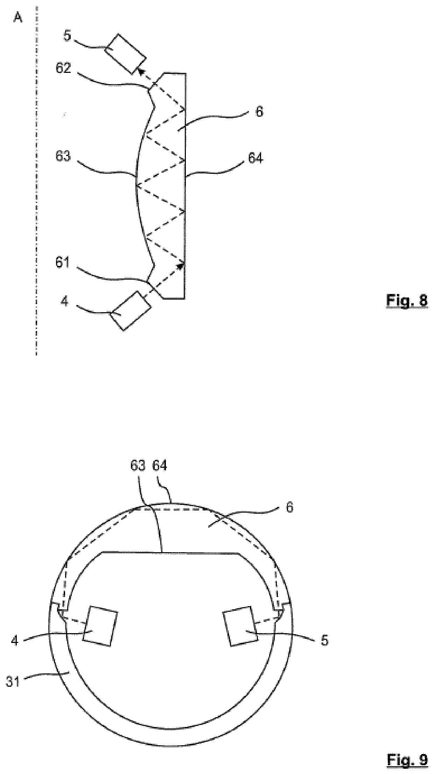

Figur 8 zeigt schematisch einen Querschnitt durch ein torusförmiges ATR-Element 6 als Messfenster. In dieser weiteren Ausführungsform wird von der zylinderförmigen Grundform abgewichen. Torusförmige Teilflächen des ATR-Elementes weisen dann eine wulstartig geformte Oberfläche auf. Wiederum sind die Stirnseiten des Eintrittsbereichs 61 und des Austrittsbereichs 62 für die Messstrahlung kegelförmig angeschrägt. Ausgehend von der Strahlungsquelle 4 wird die Messstrahlung trotz des Krümmungsverlaufs auf der Innenseite 63 durch Totalrefexion zum optischen Empfänger 5 geführt und dort detektiert. In den Figuren sind der Einfachheit halber keine divergenten Lichtwege gezeigt. Weiterhin ist in der Figur die Symmetrieachse A dargestellt, wobei die bezüglich dieser Achse symmetrischen Teile der Anordnung der Einfachheit halber nicht dargestellt sind.

Figur 9 zeigt schematisch einen Querschnitt durch ein ATR-Element 6, welches bereichsweise als Planzylinderlinse ausgebildet ist. In dieser Ausführungsform findet die Einkopplung der Messstrahlung von der Strahlungsquelle 4 sowie die Auskopplung in den optischen Empfänger 5 nahezu in radialer Richtung statt. Bei dieser Anordnung kann eine Optimierung der Lichtführung im ATR-Element 6 erreicht werden.

Ein wesentlicher Vorteil dieser Spezialformen liegt darin, dass das ATR-Element 6 als abbildendes Linsenelement für eine weitere optische Sensorik in Kombination mit der ATR-Messtechnik verwendet werden kann. Ein ATR-Element 6 kann zur Verbesserung der Reflektivität, insbesondere für Einfallswinkel im Bereich der Grenzwinkel für die Totalreflexion, auf der Innenseite mit dielektrischen Schichten für den verwendeten ATR-Spektralbereich oder auch metallisch beschichtet werden. Als weitere alternative Ausführungsformen für die Einkopplung in radialer Richtung sind auch Zylinder-Meniskus-Linsen oder auch anderweitige Linsen denkbar. Selbstverständlich können auch verschiedene abbildende Linsenelemente in einer Sonde kombiniert werden; so kann beispielsweise zu der in Figur 9 gezeigten Planzylinderlinse dieser gegenüberliegend noch eine Meniskuslinse angeordnet sein.

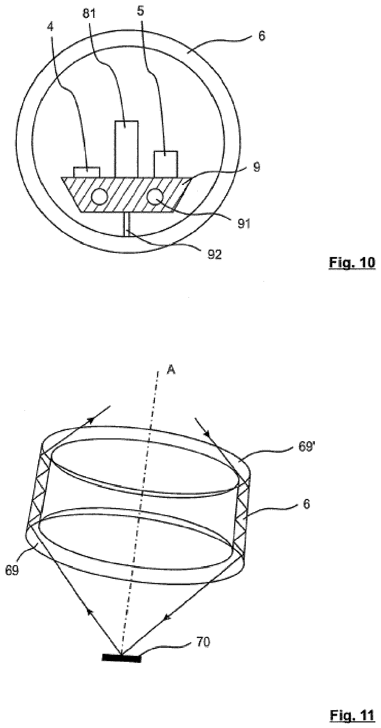

Figur 10 zeigt schematisch einen Querschnitt eines zylinderförmigen ATR-Elements 6 mit gekühlten Strahlungsquellen 4, 81 bzw. einem Empfänger 5. Wird die Licht-Einkopplung mit einer oder mehreren Strahlungsquellen 4, 81 in der Nähe des ATR-Elements 6 realisiert und/oder geschieht die Licht-Auskopplung mit einem optischer Empfänger 5 als Detektorelement in der Nähe des ATR-Elements 6, so ist gegebenenfalls eine Kühlung durch eine Kühleinrichtung 9 vorzusehen. Dazu ist es vorteilhaft, dass die Kühleinrichtung 9, beispielsweise in Form von Kupferprofilen oder - stäben, entlang der Innenseite bis zum ATR Element 6 geführt und gegebenenfalls mit einem Abstandshalter 92 fixiert werden. Diese Kühleinrichtung 9, mit der die Lichtquellen und Detektoren in gutem thermischen Kontakt stehen, kann über Kühlkanäle 91 auch mit einer Wasser- oder Luftkühlung versehen sein.

Figur 11 zeigt schematisch ein zylindrisches ATR-Element 6 mit zweifachem Lichtdurchlauf im Sondenkörper. Das von der in der Figur nicht dargestellten Strahlungsquelle ausgehende Strahlungsbündel wird dabei über die Fase 69 in das hohlzylindrische ATR-Element 6 eingekoppelt und dort in der bekannten Weise mehrfach an den Grenzflächen zur Umgebung total reflektiert. Anschließend tritt die Strahlung aus dem ATR-Element durch die gegenüberliegende Fase 69' aus und wird dort über den Spiegel 70 auf der gegenüberliegenden Seite wieder in das ATR-Element 6 eingekoppelt, wo wiederum eine mehrfache Totalreflexion an den Grenzflächen erfolgt, bis es zum Austritt aus dem ATR-Element 6 kommt. Nach dem Austritt der Strahlung aus dem ATR-Element 6 wird diese einem in der Figur nicht dargestellten Empfänger zugeführt. Der Spiegel 70 kann als einfacher Spiegel oder als abbildender Spiegel zur Strahlkorrektur, insbesondere zur Refokussierung ausgebildet sein.

Eine schwenk- oder schaltbare Ausführung des Spiegels 70 kann eine Kontrastveränderung um den Faktor zwei ermöglichen, da sich auf diese Weise die Anzahl der Totalreflexionen der Strahlung an der Grenzfläche des ATR-Elementes 6 verdoppeln bzw. halbieren lässt.

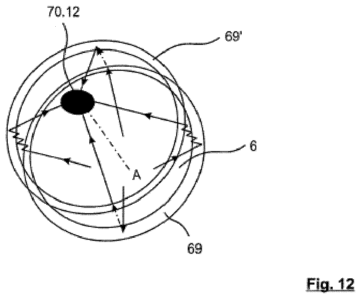

Figur 12 zeigt eine gegenüber Figur 11 weiter modifizierte Variante, die nicht unter die Ansprüche fällt. Auch in diesem

Fall ist das ATR-Element 6 hohlzylindrisch mit Fasen 69 beziehungsweise 69' ausgeführt. Im Unterschied zu der in Figur 11 dargestellten Anordnung wird in diesem Fall die Strahlung parallel beziehungsweise gleichzeitig an verschiedenen Stellen über die Fase 69 in das ATR-Element 6 eingekoppelt und erreicht nach dem Austritt aus dem ATR-Element 6 über die Fase 69' den Detektor 70.12. Anstelle des Detektors 70.12 kann auch ein Spiegel, insbesondere ein Sammelspiegel, in dessen Focus ein Detektorelement angeordnet ist, oder ein optisches Element zur Strahllenkung und Formung, beispielsweise ein Spiegel oder ein Umlenkungsprisma angeordnet sein. Die gezeigte parallelisierte Einstrahlung kann auf unterschiedlichste Weisen erreicht werden, insbesondere durch ein facettiertes, verspiegeltes Element, Rundumspiegel, eine Anordnung von Einzelspiegeln oder ähnlichem.

Die in Figur 11 und 12 dargestellten Fasen 69 und 69' können insbesondere auch facettiert ausgebildet sein, also kleine plane Flächen zur Einkopplung bzw. zur Auskopplung aufweisen.

### Bezugszeichenliste:

- 1: Analysevorrichtung

- 2: Sondengehäuse
- 21: Öffnung des Sondengehäuses

- 3: Sondenkörper
- 31: Umfangswand des Sondenkörpers
- 311: Innenseite der Umfangswand
- 312: Außenseite der Umfangswand
- 32: Abschlusskappe

- 4: Strahlungsquelle
- 41: Einkoppeloptik

- 5: optischer Empfänger
- 51: Auskoppeloptik
- 52: Lichtleitfaser

- 6: ATR-Element, Messfenster
- 61: Eintrittsbereich
- 62: Austrittsbereich
- 63: Innenseite
- 64: Außenseite
- 65: Gitterkoppler
- 66: Prismenkoppler
- 67: Zylindersegment
- 68: Spiegelflächen
- 69: Fase
- 69': Fase
- 70: Spiegel
- 70.12: Detektor
- 7: Auswerteeinheit

- 8: weitere optische Messanordnung
- 81: weitere Strahlungsquelle
- 82: weiterer Empfänger

- 9: Kühleinrichtung
- 91: Kühlkanal
- 92: Abstandshalter

- 10: Produktraum

- A: Symmetrieachse
- Pfeile: Strahlenverlauf Messstrahlung

## Patentansprüche

1. Vorrichtung (1) zur Analyse von einem sich in einem Produktraum (10) befindenden zu analysierenden Gut mit
- einem Sondengehäuse (2),
- einem in dem Sondengehäuse (2) angeordneten Sondenkörper (3) mit einer Umfangswand (31),
- mindestens einer Strahlungsquelle (4) und mindestens einem optischen Empfänger (5),
- zumindest einem Messfenster (6) im Sondenkörper (3) mit einem Eintrittsbereich (61) und einem Austrittsbereich (62) für Messstrahlung,
- einer Auswerteeinheit (7),
- einer Messposition des Sondenkörpers (3), bei der wenigstens ein Teil des Sondenkörpers (3), in welchem sich das Messfenster (6) befindet, durch eine Öffnung (21) des Sondengehäuses (2) in den Produktraum (10) zur Analyse eintaucht und,
- einer zurückgezogenen Position des Sondenkörpers (3), bei welcher sich der Sondenkörper (3) wenigstens noch teilweise im Bereich der Öffnung (21) des Sondengehäuses (2) befindet und dabei die Öffnung (21) abdeckt,
**dadurch gekennzeichnet, dass**
- das zumindest eine Messfenster ein ATR-Element (6) ist,
- das ATR-Element (6) in wenigstens einem Teilbereich der Umfangswand (31) des Sondenkörpers (3) im Strahlengang angeordnet ist, und dass
- Mittel (70) vorhanden sind, mit welchen die Messstrahlung nach dem Austritt aus dem ATR-Element (6) erneut in dieses eingekoppelt werden kann.

2. Vorrichtung (1) nach Anspruch 1, **dadurch gekennzeichnet, dass** das ATR-Element (6) als Hohlzylinder oder als Hohlzylindersegment ausgebildet ist.

3. Vorrichtung (1) nach einem der Ansprüche 1 oder 2,
**dadurch gekennzeichnet, dass** der Eintrittsbereich (61) und/oder Austrittsbereich (62) der Messstrahlung eines ATR-Elements (6) so ausgebildet ist, dass die Messstrahlung im ATR-Element (6) parallel zu der Längsachse zum Austrittsbereich (62) geführt wird.

4. Vorrichtung (1) nach einem der Ansprüche 1 oder 2,
**dadurch gekennzeichnet, dass** der Eintrittsbereich (61) und/oder Austrittsbereich (62) der Messstrahlung im Falle eines zylinderförmigen ATR-Elements (6) so ausgebildet ist, dass die Messstrahlung im ATR-Element (6) kreisförmig umlaufend zum Austrittsbereich (62) geführt wird.

5. Vorrichtung (1) nach einem der Ansprüche 1 oder 2,
**dadurch gekennzeichnet, dass** der Eintrittsbereich (61) und/oder Austrittsbereich (62) der Messstrahlung im Falle eines zylinderförmigen ATR-Elements (6) so ausgebildet ist, dass die Messstrahlung im ATR-Element (6) schraubenförmig umlaufend zum Austrittsbereich (62) geführt wird.

6. Vorrichtung (1) nach einem der Ansprüche 1 bis 5, **dadurch gekennzeichnet,**
**dass** mehrere über die Umfangswand (31) des Sondenkörpers (3) verteilt angeordnete ATR-Elemente (6) vorgesehen sind.

7. Vorrichtung (1) nach einem der Ansprüche 1 bis 6,
**dadurch gekennzeichnet, dass** das zumindest eine ATR-Element (6) mit der Außenseite (312) der Umfangswand (31) des Sondenkörpers (3) bündig abschließt.

8. Vorrichtung (1) nach einem der Ansprüche 1 bis 7,
**dadurch gekennzeichnet, dass** das zumindest eine ATR-Element (6) bis auf den Eintrittsbereich (61) und/oder Austrittsbereich (62) der Messstrahlung mit der Innenseite (311) der Umfangswand (31) des Sondenkörpers (3) bündig abschließt.

9. Vorrichtung (1) nach einem der Ansprüche 1 bis 8,
**dadurch gekennzeichnet, dass** der Eintrittsbereich (61) und/oder Austrittsbereich (62) der Messstrahlung des ATR-Elements (6) als Gitterkoppler (65) und/oder als Prismenkoppler (66) ausgebildet ist.

10. Vorrichtung (1) nach einem der Ansprüche 1 bis 9,
**dadurch gekennzeichnet, dass** der Eintrittsbereich (61) und/oder Austrittsbereich (62) der Messstrahlung des ATR-Elements (6) als Einkerbung oder in kegelförmiger Ausführung auf der Innenseite (63) des ATR-Elements (6) ausgebildet ist.

11. Vorrichtung (1) nach einem der Ansprüche 1 bis 10,
**dadurch gekennzeichnet, dass** das zumindest eine ATR-Element (6) zur Ein- bzw. Auskopplung weiterer optischer Messanordnungen (8) verwendbar ist.

12. Vorrichtung (1) nach Anspruch 11,
**dadurch gekennzeichnet, dass** das zumindest eine ATR-Element (6) für weitere optische Messanordnungen als abbildendes optisches Element ausgeführt ist.

13. Vorrichtung (1) nach einem der Ansprüche 1 bis 12,
**dadurch gekennzeichnet, dass** das zumindest eine ATR-Element (6) auf der Innenseite (63) und/oder Außenseite (64) zumindest teilweise mit einer dielektrischen Schicht und/oder mit einer Metallschicht beschichtet ist.

14. Vorrichtung (1) nach einem der Ansprüche 1 bis 13,
**dadurch gekennzeichnet, dass** Mittel vorhanden sind, die Messstrahlung gleichzeitig an verschiedenen Stellen in das ATR-Element (6) einzukoppeln.

## Claims

1. Device (1) for the analysis of a product to be analyzed that is situated in a product space (10), comprising
- a probe housing (2),
- a probe body (3) with a circumferential wall (31) that is arranged in the probe housing (2),
- at least one radiation source (4) and at least one optical receiver (5),
- at least one measurement window (6) in the probe body (3) with an entrance region (61) and an exit region (62) for measurement radiation,
- an evaluation unit (7),
- a measurement position of the probe body (3), at which at least one part of the probe body (3) in which the measurement window (6) is situated plunges through an opening (21) of the probe housing (2) into the product space (10) for analysis, and
- a retracted position of the probe body (3), at which the probe body (3) is at least still partly situated in the region of the opening (21) of the probe housing (2) and covers the opening (21) at the same time,
**characterized in that**
- the at least one measurement window is an ATR element (6),
- the ATR element (6) is arranged in at least one subregion of the circumferential wall (31) of the probe body (3) in the beam path, and **in that**
- there are means (70) by means of which the measurement radiation can, after exit from the ATR element (6), be coupled again into said ATR element.

2. Device (1) according to Claim 1, **characterized in that** the ATR element (6) is designed as a hollow cylinder or as a hollow-cylinder segment.

3. Device (1) according to either of Claims 1 and 2, **characterized in that** the entrance region (61) and/or exit region (62) of the measurement radiation of an ATR element (6) is designed such that the measurement radiation in the ATR element (6) is guided to the exit region (62) in parallel to the longitudinal axis.

4. Device (1) according to either of Claims 1 and 2, **characterized in that** the entrance region (61) and/or exit region (62) of the measurement radiation is, in the case of a cylindrical ATR element (6), designed such that the measurement radiation in the ATR element (6) is guided in a circular and circumferential manner to the exit region (62).

5. Device (1) according to either of Claims 1 and 2, **characterized in that** the entrance region (61) and/or exit region (62) of the measurement radiation is, in the case of a cylindrical ATR element (6), designed such that the measurement radiation in the ATR element (6) is guided in a spiral and circumferential manner to the exit region (62).

6. Device (1) according to any of Claims 1 to 5, **characterized in that** multiple ATR elements (6) arranged with distribution over the circumferential wall (31) of the probe body (3) are provided.

7. Device (1) according to any of Claims 1 to 6, **characterized in that** the at least one ATR element (6) is flush with the outer side (312) of the circumferential wall (31) of the probe body (3).

8. Device (1) according to any of Claims 1 to 7, **characterized in that** the at least one ATR element (6) is, apart from the entrance region (61) and/or exit region (62) of the measurement radiation, flush with the inner side (311) of the circumferential wall (31) of the probe body (3).

9. Device (1) according to any of Claims 1 to 8, **characterized in that** the entrance region (61) and/or exit region (62) of the measurement radiation of the ATR element (6) is designed as a lattice coupler (65) and/or as a prism coupler (66).

10. Device (1) according to any of Claims 1 to 9, **characterized in that** the entrance region (61) and/or exit region (62) of the measurement radiation of the ATR element (6) is designed as a notch or in a tapered realization on the inner side (63) of the ATR element (6).

11. Device (1) according to any of Claims 1 to 10, **characterized in that** the at least one ATR element (6) is usable for the coupling-in and coupling-out of further optical measurement arrangements (8).

12. Device (1) according to Claim 11, **characterized in that** the at least one ATR element (6) is realized as an imaging optical element for further optical measurement arrangements.

13. Device (1) according to any of Claims 1 to 12, **characterized in that** the at least one ATR element (6) is at least partly coated with a dielectric layer and/or with a metal layer on the inner side (63) and/or outer side (64).

14. Device (1) according to any of Claims 1 to 13, **characterized in that** there are means for the simultaneous coupling-in of the measurement radiation into the ATR element (6) at different points.

## Revendications

1. Dispositif (1) permettant d'analyser un produit à analyser se trouvant dans une chambre de produit (10), comprenant
- un boîtier de sonde (2),
- un corps de sonde (3) doté d'une paroi périphérique (31) et disposé dans le boîtier de sonde (2),
- au moins une source de rayonnement (4) et au moins un récepteur optique (5),
- au moins une fenêtre de mesure (6) dans le corps de sonde (3), dotée d'une zone d'entrée (61) et d'une zone de sortie (62) pour un rayonnement de mesure,
- une unité d'évaluation (7),
- une position de mesure du corps de sonde (3) dans laquelle au moins une partie du corps de sonde (3), dans laquelle se trouve la fenêtre de mesure (6), pénètre dans la chambre de produit (10) à travers une ouverture (21) du boîtier de sonde (2) en vue de l'analyse, et
- une position rétractée du corps de sonde (3) dans laquelle le corps de sonde (3) se trouve au moins encore partiellement dans la zone de l'ouverture (21) du boîtier de sonde (2) tout en recouvrant l'ouverture (21), **caractérisé en ce que**
- ladite au moins une fenêtre de mesure est un élément ATR (6),
- l'élément ATR (6) est disposé dans la trajectoire du faisceau au moins dans une zone partielle de la paroi périphérique (31) du corps de sonde (3), et
- **en ce qu'**il existe des moyens (70) qui permettent de réinjecter le rayonnement dans l'élément ATR (6) après la sortie de celui-ci.

2. Dispositif (1) selon la revendication 1, **caractérisé en ce que** l'élément ATR (6) est réalisé sous forme de cylindre creux ou de segment de cylindre creux.

3. Dispositif (1) selon l'une quelconque des revendications 1 et 2, **caractérisé en ce que** la zone d'entrée (61) et/ou la zone de sortie (62) du rayonnement de mesure d'un élément ATR (6) est/sont réalisée(s) de telle sorte que le rayonnement de mesure dans l'élément ATR (6) est guidé en parallèle à l'axe longitudinal jusqu'à la zone de sortie (62).

4. Dispositif (1) selon l'une quelconque des revendications 1 et 2, **caractérisé en ce que** dans le cas d'un élément ATR (6) cylindrique, la zone d'entrée (61) et/ou la zone de sortie (62) du rayonnement de mesure est/sont réalisée(s) de telle sorte que le rayonnement de mesure dans l'élément ATR (6) est guidé de manière à circuler en forme de cercle jusqu'à la zone de sortie (62) .

5. Dispositif (1) selon l'une quelconque des revendications 1 et 2, **caractérisé en ce que** dans le cas d'un élément ATR (6) cylindrique, la zone d'entrée (61) et/ou la zone de sortie (62) du rayonnement de mesure est/sont réalisée(s) de telle sorte que le rayonnement de mesure dans l'élément ATR (6) est guidé de manière à circuler en spirale jusqu'à la zone de sortie (62).

6. Dispositif (1) selon l'une quelconque des revendications 1 à 5, **caractérisé en ce que** plusieurs éléments ATR (6) sont prévus qui sont disposés de manière répartie sur la paroi périphérique (31) du corps de sonde (3) .

7. Dispositif (1) selon l'une quelconque des revendications 1 à 6, **caractérisé en ce que** ledit au moins un élément ATR (6) est en affleurement avec la face extérieure (312) de la paroi périphérique (31) du corps de sonde (3).

8. Dispositif (1) selon l'une quelconque des revendications 1 à 7, **caractérisé en ce que** ledit au moins un élément ATR (6), à l'exception de la zone d'entrée (61) et/ou de la zone de sortie (62) du rayonnement de mesure, est en affleurement avec la face intérieure (311) de la paroi périphérique (31) du corps de sonde (3).

9. Dispositif (1) selon l'une quelconque des revendications 1 à 8, **caractérisé en ce que** la zone d'entrée (61) et/ou la zone de sortie (62) du rayonnement de mesure de l'élément ATR (6) est/sont réalisée(s) comme un coupleur à réseau (65) et/ou comme un coupleur à prisme (66) .

10. Dispositif (1) selon l'une quelconque des revendications 1 à 9, **caractérisé en ce que** la zone d'entrée (61) et/ou la zone de sortie (62) du rayonnement de mesure de l'élément ATR (6) est/sont réalisée(s) comme une encoche ou une réalisation conique sur la face intérieure (63) de l'élément ATR (6).

11. Dispositif (1) selon l'une quelconque des revendications 1 à 10, **caractérisé en ce que** ledit au moins un élément ATR (6) est utilisable pour l'injection ou le déclenchement d'autres ensembles de mesure optique (8) .

12. Dispositif (1) selon la revendication 11, **caractérisé en ce que** ledit au moins un élément ATR (6) est réalisé comme un élément d'imagerie optique pour d'autres ensembles de mesure optique.

13. Dispositif (1) selon l'une quelconque des revendications 1 à 12, **caractérisé en ce que** ledit au moins un élément ATR (6) sur la face intérieure (63) et/ou la face extérieure (64) est recouvert au moins en partie d'une couche diélectrique et/ou d'une couche de métal.

14. Dispositif (1) selon l'une quelconque des revendications 1 à 13, **caractérisé en ce qu'**il existe des moyens pour injecter le rayonnement de mesure en même temps à différents endroits dans l'élément ATR (6).
